# FASCICULE DE BREVET EUROPEEN

(11) **EP 0 546 918 B1**
(45) Date de publication et mention de la délivrance du brevet: **14.02.1996**
(21) Numéro de dépôt: 92403312.9
(22) Date de dépôt: 08.12.1992
(51) Int. Cl.: G01P 3/44

(54) **Roulement préassemblé à éléments codeur et capteur additionnels**
Vormontiertes Lager mit Kodierelement und einem zusätzlichen Sensor
Pre-assembled bearing with encoding element and additional sensor

(30) Priorité: 10.12.1991 FR 9115253
(43) Date de publication de la demande: 16.06.1993
(73) Titulaire: S.N.R. ROULEMENTS, F-74010 Annecy Cédex (FR)
(72) Inventeur: Hajzler, Christian, F-74010 Annecy (FR)
(74) Mandataire: Ernst-Schonberg, Michel

(56) Documents cités:
- EP-A- 0 395 892
- FR-A- 2 643 691
- FR-A- 2 645 924
- US-A- 5 010 290
- US-A- 5 063 346

## Description

L'invention concerne un roulement préassemblé à éléments codeur et capteur additionnels constitué par une bague extérieure à parties étagées, une bague intérieure, des corps roulants disposés entre lesdites bagues, un support d'élément capteur monté sur la bague extérieure et un élément codeur au contact dudit élément capteur.

La publication FR-A-2645924 décrit un tel roulement.

Lorsque les bagues extérieure et intérieure sont réalisées par déformation d'une tôle de faible épaisseur, le support de l'élément capteur ne peut pas être solidarisé avec précision avec la bague extérieure par suite de ses défauts de géométrie consécutifs au manque de précision des procédés de fabrication des bagues du roulement.

Pour remédier à cet inconvénient la publication FR-A-2643691 révèle un dispositif de fixation amovible de l'élément capteur réalisé sous la forme d'une attache tandis que l'élément codeur est monté sur une bague de retenue emmanché à force sur un arbre tournant.

Lorsque l'arbre tournant est constitué par un tronçon de colonne de direction de véhicule automobile, il est nécessaire de supporter ledit arbre par des paliers montés dans un support fixe.

De ce fait le montage des éléments codeur et capteur sur le roulement doit être effectué de manière simple dès que l'on désire réaliser des séries de véhicules munis d'équipements de mesure et de contrôle.

L'invention a ainsi pour objet un roulement à éléments codeur et capteur additionnels adaptés aux nécessités de montage et de démontage exigés qui possèdent un encombrement réduit compatible avec l'espace disponible autour de la colonne de direction.

L'invention a encore pour objet un roulement du type prédéfini dont le montage sur une colonne de direction est réalisé sans réglage préalable et dans lequel les éléments codeur et capteur sont protégés.

Selon l'invention le roulement est caractérisé par le fait que les éléments codeur et capteur sont préassemblés sur un premier support monté coaxialement à l'intérieur de la partie étagée de la bague extérieure et que l'élément capteur possède une extension radiale encastrée dans une rainure longitudinale de ladite bague extérieure et que cette dernière possède une portée annulaire d'encastrement dans un deuxième support.

Le roulement ainsi réalisé utilise avantageusement un élément codeur constitué par un aimant multipolaire et un élément capteur à effet Hall, une magnétorésistance ou un circuit analogique sensible à un nombre élevé d'impulsions.

D'autres caractéristiques et avantages de l'invention apparaîtront à la lecture de la description d'un exemple de réalisation du roulement et des montages d'application en référence au dessin annexé dans lequel :
- la figure 1 est une vue en coupe axiale développée du roulement sur lequel les éléments codeur et capteur sont montés sur un support disposé coaxialement dans la bague extérieure du roulement.
- la figure 2 est une vue latérale du roulement représenté à la figure 1.
- la figure 3 est une en coupe axiale d'un montage du roulement représenté à la figure 1 suivant lequel le premier support des éléments codeur et capteur est solidarisé indirectement avec un arbre de commande.
- la figure 4 est une vue en coupe partielle d'une variante de montage des éléments codeur et capteur sur le support représenté à la figure 3.
- les figures 5, 6, 7 sont des vues en coupe axiale de variantes de réalisation du montage du roulement représenté à la figure 1.

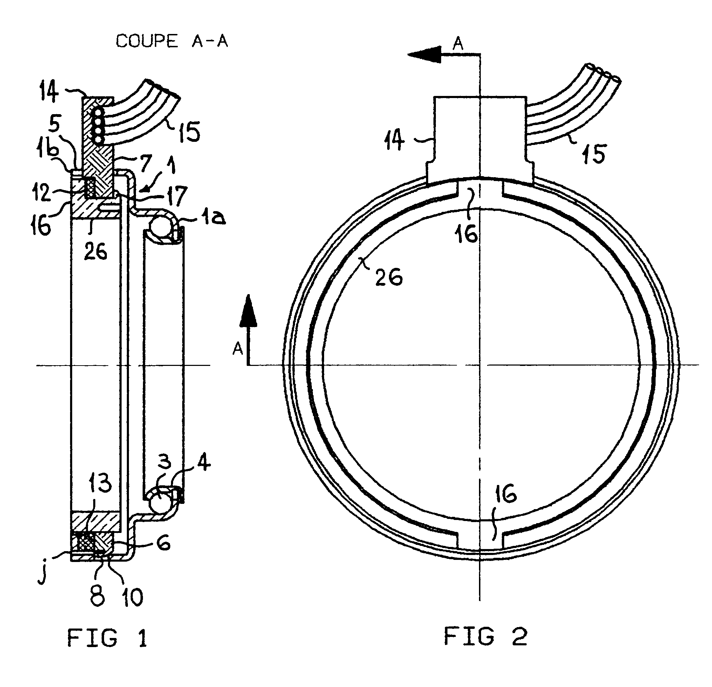

Le roulement préassemblé à élément codeur et capteur représenté à la figure 1 est constitué par une bague extérieure en tôle 1 à parties étagées radialement 1a, 1b, parmi lesquelles la partie la porte le chemin de roulement des corps roulants 3. La partie 1b de plus fort diamètre possède une rainure 5 qui s'étend longitudinalement à partir d'une extrémité latérale de la partie 1b en direction de la partie 1a.

Une bague intérieure en tôle 4 porte le chemin intérieur de roulement des corps 3 et un épaulement radial destiné à l'assemble rigide des bagues 1, 4.

Le support annulaire 6 de l'élément capteur 7 est monté dans la partie 1b de la bague 1. Dans le but de permettre l'immobilisation angulaire du support 6 dans la partie 1b, la surface cylindrique extérieure du support 6 porte des ergots déformables 8 encastrés dans les lumières 10 réparties angulairement sur la partie 1b de la bague 1. Un jeu de montage radial "j" est prévu entre la surface cylindrique extérieure du support 6 et la surface cylindrique intérieure de la partie 1b dans le but d'éviter les perturbations de fonctionnement des éléments capteur et codeur par suite du montage du roulement sur des éléments mécaniques dont la concentricité est imparfaite.

L'élément codeur 12 est accolé axialement au support annulaire 6 de l'élément capteur 7. A cet effet le support 6 de l'élément capteur 7 possède une face radiale sensible 13 de contact avec l'élément codeur 12, ce dernier étant constitué de manière en soi comme pour un anneau magnétique multipolaire.

Une extension radiale 14 de l'élément capteur 7 est encastrée dans la rainure 5 de la bague extérieure 1.

L'extension radiale 14 porte par ailleurs un câble 15 d'alimentation et/ou de transmission du signal de l'élément capteur.

L'élément codeur 12 est réalisé sous la forme d'un anneau qui possède une face latérale aimantée multipolaire en contact permanent avec la face radiale 13 de l'élément capteur 7.

La face de l'élément codeur 12 opposée à la face aimantée possède des crans d'entraînement en rotation à partir d'un support 26 porteur de crans d'entraînement homologues.

Le support 26 possède une portée de montage des éléments capteur 7 et codeur 12 et s'étend radialement par un flanc 16 élastique qui exerce une poussée axiale sur l'ensemble des éléments capteur et codeur 7, 12 en contact de crans 17 qui limitent axialement la portée de montage des éléments 7, 12 et qui constituent une butée desdits éléments 7, 12.

L'élasticité du flanc 16 peut être conférée à titre d'exemple non limitatif par une armature intérieure "a" du support 26 ou par une configuration spécifique.

L'ensemble des éléments 7, 12 est ainsi immobilisé
- axialement sur le support 26 par le flanc 16 et par les crans 17,
- radialement à l'intérieur de la partie 1b de la bague 1 avec un jeu autorisé "j".
- angulairement par les crans d'entraînement portés latéralement par l'élément codeur 12.

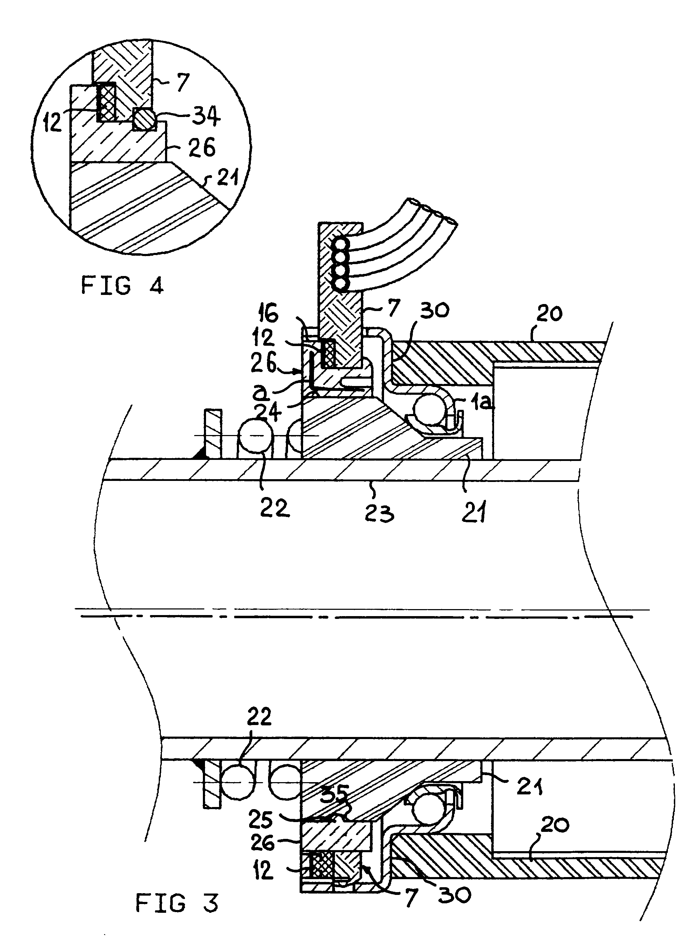

Selon l'exemple de montage de la figure 4, l'ensemble des éléments codeur et capteur 12, 7 est immobilisé axialement sur le support 26 par un joint torique 34 disposé dans une rainure du support 26 et qui réalise un appui élastique de l'élément capteur 7.

La figure 3 illustre le montage d'application du roulement représenté aux figures 1 et 2 dans un deuxième support tubulaire de colonne de direction 20.

A cet effet, la partie 1a de la bague 1 est limitée axialement par une face de butée 30 et possède une portée d'encastrement dans le support 20.

Le roulement est chargé axialement par une bague de retenue formant entretoise 21 sur laquelle prend appui un ressort 22 montés conjointement sur un arbre tubulaire 23 de la direction.

L'entretoise 21 est rendue solidaire en rotation avec l'arbre 23 par tout moyen conventionnel tel qu'un frettage, une denture ou un ajustement prismatique.

L'entretoise 21 possède une portée extérieure 24 de montage du support 26 au contact de laquelle le support 26 est fretté ou monté à cannelures dans le but de réaliser la fonction d'entraînement en rotation dudit support 26 par l'intermédiaire de l'arbre 23.

Ainsi que cela est montré à la partie inférieure de la figure 3, la retenue axiale des éléments codeur et capteur 12, 7 est réalisée par une nervure circulaire 25 intérieure au support 26. La nervure 25 est engagée dans une gorge 35 correspondante de la bague 21 prévue sur la portée de montage dudit support 26 sur ladite bague de retenue 21.

Le ressort 22 assure de la sorte la mise en butée du roulement contre le support 20 au niveau de sa face de butée 30.

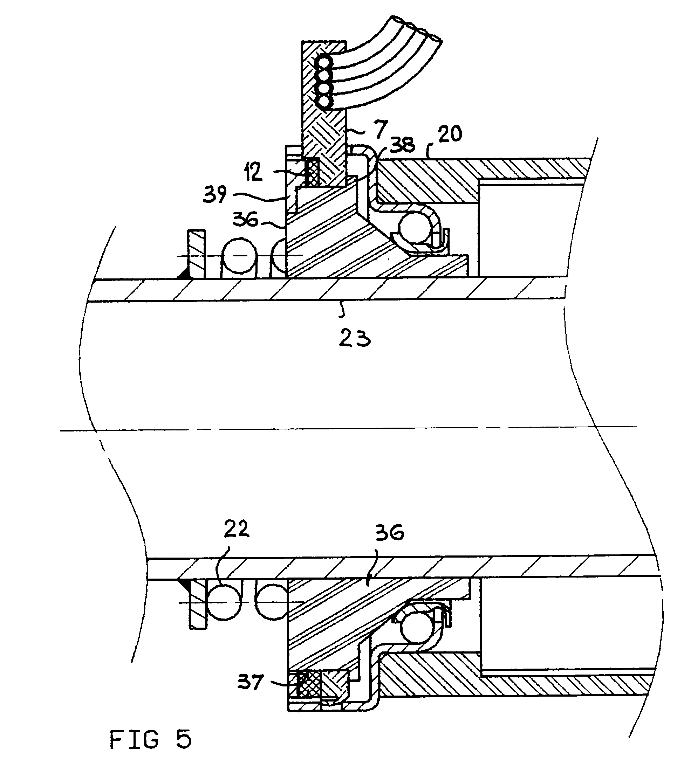

La figure 5 montre une variante de réalisation du montage selon lequel la fonction du support des éléments codeur et capteur est intégrée à l'entretoise 36 de mise en charge du roulement. A cet effet l'entretoise 36 possède une portée cylindrique extérieure 37 de centrage des éléments codeur et capteur 12, 7. La portée 37 est limitée axialement par un épaulement de butée 38 au contact de la face passive de l'élément capteur 7.

Une rondelle élastique 39 solidaire de l'entretoise 36 prend appui sur l'élément codeur 12 dans le but d'assurer l'appui de l'ensemble des éléments 7, 12 au contact de l'épaulement 38.

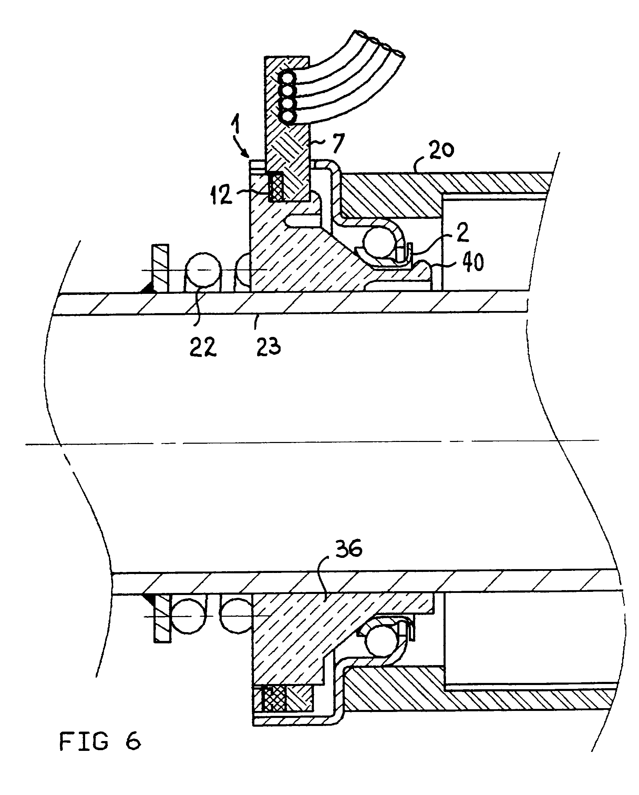

La figure 6 montre une autre variante de réalisation du montage selon lequel l'entretoise 36 possède des extensions axiales 40 radialement déformables dans le but de favoriser l'immobilisation axiale des éléments codeur et capteur 12, 7 préassemblés avec l'entretoise 36 sur le roulement.

A cet effet, les extensions axiales 40 de l'entretoise sont constituées par des doigts radialement flexibles qui s'étendent axialement dans la bague intérieure 2 du roulement dans le but d'assurer la retenue axiale dudit roulement sur l'entretoise 36 avant son montage sur la colonne de direction.

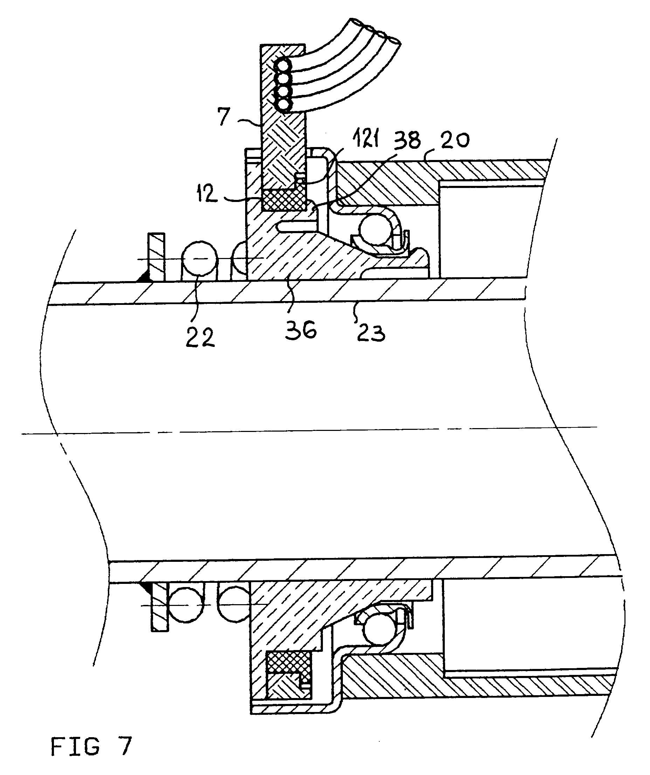

La figure 7 montre une autre variante de réalisation du montage selon lequel les éléments codeur et capteur 12, 7 possèdent une disposition encastrée selon laquelle l'élément codeur 12 est disposé dans un alésage de l'élément capteur 7 et possède un flanc 121 d'immobilisation axiale en butée sur l'élément capteur 7.

Dans cet exemple l'élément capteur 7 reçoit radialement les impulsions de l'élément codeur 12. L'entretoise 36 possède un flanc latéral d'immobilisation axiale de l'ensemble codeur-capteur mis en butée sur l'épaulement de butée 38.

Des différentes réalisations du montage dans lesquelles les éléments codeur et capteur sont montés coaxialement à l'intérieur de la partie 1b de la bague, résulte une protection accrue des parties sensibles des éléments.

## Revendications

1. Roulement préassemblé à éléments codeur et capteur additionnels constitué par une bague extérieure (1) à parties étagées, une bague intérieure (4), des corps roulants (3) disposés entre lesdites bagues, un support (26, 36) d'élément capteur (7) monté sur la bague extérieure (1) et un élément codeur (12) au contact dudit élément capteur (7), caractérisé par le fait que :
- les éléments codeur et capteur sont préassemblés sur le support (26, 36) monté coaxialement à l'intérieur de la partie (1b) étagée de la bague extérieure
- l'élément capteur possède une extension radiale (14) encastrée dans une rainure (5) longitudinale de ladite bague extérieure et que cette dernière possède une portée annulaire d'encastrement dans un deuxième support (20).

2. Roulement selon la revendication 1, caractérisé par le fait que le support (26, 36) des éléments codeur et capteur (12, 7) est solidaire en rotation d'un arbre de commande (23) et possède un flanc élastique (16) de précharge des éléments codeur et capteur (12, 7).

3. Roulement selon la revendication 2, caractérisé par le fait que la portée de montage du support (26) des éléments codeur et capteur est liée en rotation avec l'arbre de commande (23) par l'intermédiaire d'une bague de retenue (21).

4. Roulement selon la revendication 3, caractérisé par le fait que la bague de retenue (21) coopère avec des moyens (22) de mise en précharge du roulement et avec des moyens d'immobilisation axiale des éléments codeur et capteur (12, 7).

5. Roulement selon la revendication 4, caractérisé par le fait que la bague extérieure possède une portée d'encastrement dans un élément tubulaire (20) et est limitée axialement par une surface de butée (30) au contact dudit élément tubulaire (20).

6. Roulement selon la revendication 1 ou 2, caractérisé par le fait que le support (36) des éléments codeur et capteur (12, 7) coopère avec les moyens (22) de mise en précharge du roulement.

7. Roulement selon l'une quelconque des revendications 1, 2, 5, 6, caractérisé par le fait que le support (36) des éléments codeur et capteur (12, 7) possède des moyens de retenue axiale (40) du roulement.

8. Roulement selon l'une quelconque des revendications 1 à 7, caractérisé par le fait que l'élément capteur (7) est monté sur un support annulaire (6) dans une partie étagée (1b) de la bague extérieure (1) du roulement et que ledit support porte des moyens (8) d'encastrement dans des lumières (10) réparties angulairement sur ladite partie (1b) de la bague.

## Claims

1. A pre-assembled bearing with additional encoding and sensor members formed by an outer ring (1) with stepped portions, an inner ring (4), rolling bodies (3) disposed between these rings, a support (26, 36) for the sensor member (7) mounted on the outer ring (1) and an encoding member (12) in contact with this sensor member (7), characterised in that:
- the encoding and sensor members are pre-assembled on the support (26, 36) mounted coaxially within the stepped portion (1b) of the outer ring,
- the sensor member comprises a radial extension (14) fitted in a longitudinal groove (5) of the outer ring and in that the latter has an annular bearing surface for fitting in a second support (20).

2. A bearing as claimed in claim 1, characterised in that the support (26, 36) of the encoding and sensor members (12, 7) is rigid in rotation with a control shaft (23) and comprises an elastic flank (16) for pre-loading of the encoding and sensor members (12, 7).

3. A bearing as claimed in claim 2, characterised in that the bearing surface for assembly of the support (26) of the encoding and sensor members is connected in rotation with the control shaft (23) by means of a retaining ring (21).

4. A bearing as claimed in claim 3, characterised in that the retaining ring (21) cooperates with means (22) for the pre-loading of the bearing and with means for the axial immobilisation of the encoding and sensor members (12, 7).

5. A bearing as claimed in claim 4, characterised in that the outer ring comprises a bearing surface for fitting in a tubular member (20) and is axially limited by a stop surface (30) in contact with this tubular member (20).

6. A bearing as claimed in claim 1 or 2, characterised in that the support (36) of the encoding and sensor members (12, 7) cooperates with the means (22) for the pre-loading of the bearing.

7. A bearing as claimed in any one of claims 1, 2, 5, 6, characterised in that the support (36) of the encoding and sensor members (12, 7) comprises means (40) for the axial retention of the bearing.

8. A bearing as claimed in any one of claims 1 to 7, characterised in that the sensor member (7) is mounted on an annular support (6) in a stepped portion (1b) of the outer ring (1) of the bearing and in that this support bears means (8) for fitting in openings (10) distributed angularly over this portion (1b) of the ring.

## Patentansprüche

1. Vormontiertes Lager mit zusätzlichen Codier- und Sensorteilen, bestehend aus einem Außenring 1 mit abgestuften Abschnitten, einem Innenring 4, Rollkörpern 3, die zwischen diesen Ringen angeordnet sind, einer Halterung 26, 36 für das Sensorteil 7, die am Außenring 1 angeordnet ist und einem Codierteil 12, das das Sensorteil 7 berührt, dadurch gekennzeichnet, daß
- die Codier- und Sensorteile mit der Halterung 26, 36 vormontiert sind, die koaxial im Inneren des abgestuften Abschnitt 1b des Außenringes angeordnet ist
- das Sensorelement eine radiale Verlängerung 14 aufweist, welche in eine Längsnut 5 des Außenringes eingreift und daß letzterer eine ringförmige Fläche zum Eingriff in eine zweite Halterung 20 aufweist.

2. Lager nach Anspruch 1 dadurch gekennzeichnet, daß die Halterung 26, 36 für die Codier- und Sensorteile 12, 7 drehfest mit einer Lenksäule 23 verbunden ist und eine elastische Kante 16 zur Beaufschlagung der Codier- und Sensorteile 12, 7 aufweist.

3. Lager nach Anspruch 2 dadurch gekennzeichnet, daß die Montagefläche der Halterung 26 für die Codier- und Sensorteile drehfest mit der Lenksäule 23 über einen Haltering 21 verbunden ist.

4. Lager nach Anspruch 3 dadurch gekennzeichnet, daß der Haltering 21 mit einer Anordnung 22 zur Vorbeaufschlagung des Lagers zusammenwirkt sowie mit einer axialen Feststellanordnung für die Codier- und Sensorteile 12, 7.

5. Lager nach Anspruch 4 dadurch gekennzeichnet, daß der Außenring eine Fläche zum Eingreifen in ein rohrförmiges Bauteil 20 aufweist und in axialer Richtung durch eine Anschlagfläche 30 bei Berührung mit dem rohrförmigen Bauteil 20 begrenzt wird.

6. Lager nach Anspruch 1 oder 2 dadurch gekennzeichnet, daß die Halterung 36 für die Codier- und Sensorteile 12, 7 mit der Anordnung 22 zur Vorbeaufschlagung des Lagers zusammenwirkt.

7. Lager nach einem der Ansprüche 1, 2, 5 oder 6 dadurch gekennzeichnet, daß die Halterung 36 für die Codier- und Sensorteile 12, 7 eine Anordnung zur axialen Halterung 40 des Lagers aufweist.

8. Lager nach einem der Ansprüche 1 bis 7 dadurch gekennzeichnet, daß das Sensorteil 7 in einer ringförmigen Lagerung 6 in einem abgestuften Abschnitt 1b des Außenringes 1 des Lagers angeordnet ist und daß diese Lagerung eine Anordnung 8 zum Eingriff in Aussparungen 10 aufweist, welche winkelmäßig über den Abschnitt 1b des Ringes verteilt sind.
